# EUROPÄISCHE PATENTSCHRIFT

(11) **EP 0 619 163 B1**
(45) Veröffentlichungstag und Bekanntmachung des Hinweises auf die Patenterteilung: **20.12.1995**
(21) Anmeldenummer: 93105583.4
(22) Anmeldetag: 05.04.1993
(51) Int. Cl.: B23P 15/28, B23K 31/02, B23P 15/34

(54) **Verfahren zur Herstellung spanabhebender Werkzeuge und Werkzeug**
Process for manufacturing cutting tools and cutting tool
Procédé pour fabriquer des outils de coupe et outil de coupe

(43) Veröffentlichungstag der Anmeldung: 12.10.1994
(73) Patentinhaber: Ledermann GmbH, 72160 Horb (DE)
(72) Erfinder: Kranz, Uwe, W-7240 Horb-Nordstetten (DE); Brobeil, Roland, W-7407 Rottenburg-Ergenzingen (DE); Hamann, Bernd, W-7240 Horb-Nordstetten (DE)
(74) Vertreter: Wasmuth, Rolf, Dipl.-Ing.

(56) Entgegenhaltungen:
- CH-A- 588 910
- DE-A- 1 815 209
- DE-A- 3 815 917
- DE-A- 4 008 102
- GB-A- 958 384

## Beschreibung

Die Erfindung betrifft ein Verfahren zur Herstellung spanabhebender Werkzeuge wie Fräser, Bohrer oder dgl., die mit Schneidplättchen bestückt sind, deren Schneiden aus einer Beschichtung mit polykristallinem Diamant (PKD), Hartmetall, keramischem Material oder einem ähnlichen Schneidwerkstoff bestehen und die nach ihrer Positionierung am Werkzeugkörper mit diesem durch Löten fest verbunden werden. Bekannte spanabhebende Werkzeuge, beispielsweise Fräser, werden in der Weise hergestellt, daß in dem Werkzeuggrundkörper des Fräsers durch spanabhebende Bearbeitung Spannuten, Sitze für die Schneidplatten bzw. Schneidplättchen sowie für die Flügel hergestellt werden, wodurch der Faserverlauf des Gefüges des Werkzeugkörpers zum Teil erheblich zerstört wird und den Spannungsverlauf beeinträchtigende Kerben entstehen (DE-OS 38 15 917). Nach der spanabhebenden Bearbeitung des Werkzeugkörpers werden die Schneiden an ihren Plattensitzen mit dem Werkzeugkörper verlötet. Hierzu werden die einzelnen Plattensitze mit einem Flußmittel bestrichen, worauf der erste Plattensitz punktuell auf Löttemperatur erwärmt und das Lot aufgebracht wird. Danach wird die einzelne Schneidplatte von Hand, beispielsweise mit einer Pinzette, auf den Plattensitz gelegt und ausgerichtet. Parallel hierzu wird weiter Wärme zugeführt, um den Lötvorgang durchführen zu können. Bei richtigem Sitz und richtiger Verlötung der Schneidplatte bzw. des Schneidplättchens wird das nächste Schneidplättchen in derselben Weise am Werkzeugkörper eingelötet. Durch die Verlötung des nächsten Schneidplättchens wird das bereits zuvor eingelötete Schneidplättchen, das inzwischen abgekühlt ist, durch die Wärme des zweiten Lötvorganges wieder erwärmt. Auf diese Weise werden nacheinander alle Schneidplättchen am Werkzeugkörper verlötet. Wird dabei eine bestimmte Temperatur überschritten, kommt es zu einer Ausscheidung von Graphit aus der Schneidendeckschicht, wodurch das PKD-Gefüge zerstört werden kann. Da dies schon bei einer relativ geringen Temperatur möglich ist, werden in der Regel nur Lote verwendet, die keine hohe Lötfestigkeit erbringen. Nachteilig ist bei diesem Verfahren besonders, daß Werkzeugkörper und die mit ihm zu verbindenden Schneidplättchen keiner gleichförmigen und kontinuierlichen Erwärmung unterliegen, und daß die beschriebenen Arbeitsvorgänge in hohem Maße von der Handfertigkeit der arbeitenden Person abhängig ist. Demgemäß können mit dem bekannten Verfahren keine gleichmäßigen Qualitätsnormen erreicht werden, da einmal der Grad der Benetzung der Lötflächen stark abhängig davon ist, mit welcher Kraft die Schneidplatte in den Plattensitz gepreßt wird, das Lot flächig vorhanden ist und daß Gasblasen des Flußmittels nicht entweichen können. Schließlich hängt die Qualität, die Standzeit sowie insbesondere die Beanspruchbarkeit des Werkzeuges und der Schneidplatten davon ab, wie hoch die jeweilige Löttemperatur beim Einzelauflöten der Schneidplatten auf den Werkzeugkörper ist.

Der Erfindung liegt die Aufgabe zugrunde, ein Verfahren anzugeben, das die vorerwähnten Nachteile vermeidet und gewährleistet, daß die Schneidplatten bzw. Schneidplättchen positionsgenau auf dem Grundkörper des Werkzeuges fixiert werden, und daß alle Schneidplättchen mit dem Werkzeuggrundkörper in gleich hoher Festigkeit verbunden sind und daß dies auch für mehrere in gleichem Arbeitsgang hergestellte spanabhebende Werkzeuge gewährleistet ist. Es ist gleichzeitig Aufgabe der vorliegenden Erfindung, ein spanabhebendes Werkzeug zu schaffen, das herstellungsmäßig einen vergleichsweise geringen Zerspanungsaufwand erfordert, eine verbesserte Sitzfläche und Lötung und somit eine höhere Festigkeit aufweist.

Gelöst wird diese Aufgabe bei einem Verfahren nach dem Gattungsbegriff des Anspruches 1 durch die Merkmale des Kennzeichens des Anspruches 1.

Dadurch daß die Schneidplättchen bzw. Schneidplatten vor dem eigentlichen Lötvorgang durch elektrische Punktschweißung an ihrem genau definierten Plattensitz am kalten Grundkörper eingelegt, positioniert und fixiert werden, können sie, da dieser Vorgang ohne Zeitdruck stattfindet, sehr genau positioniert werden, wobei der Arbeitsvorgang wesentlich vereinfacht ist. Außerdem kann die Lötpaste in die Plattensitze des kalten Grundkörpers vor dem eigentlichen Lötvorgang sorgfältig eingebracht werden. Dies ermöglicht es, daß auch kleinere Schneidplättchen wirtschaftlich eingesetzt werden können. Die Widerstandsschweißung kann dabei durch eine Kondensatorentladung erfolgen. Bei diesem Schweißvorgang kann, insbesondere wenn Grundkörper und Schneidplättchen beschichtet sind, eine Legierung entstehen, deren Schmelzpunkt höher sein kann als der Schmelzpunkt der Einzelkomponenten, was für den nachfolgenden Vakuumlötvorgang von Vorteil ist. Darüberhinaus wird die Fließfähigkeit des Lotes verbessert, und es ergeben sich infolge der genauen Fixierung der Schneidplättchen während des eigentlichen Lötvorganges stets gleiche Anpreßverhältnisse und gleiche Kapillarwirkungen des Lotes. Bei dem anschließenden Lötvorgang im Vakuumverfahren können höhere Temperaturen von 720° bis 850° und Unterdrücke von 10⁻⁴ bis 10⁻⁶ mbar angewandt werden, ohne daß eine die Werkzeugstandzeit reduzierende Graphitisierung der PKD-Oberfläche eintritt. Die Anwendung höherer Temperaturen ermöglicht auch den Einsatz eines entsprechenden Lotes, wodurch die Lötfestigkeit ebenfalls erhöht wird. Von Vorteil ist weiter, daß bei dem Vakuumlötverfahren auf ein Flußmittel verzichtet werden kann und somit Flußmitteleinschlüsse oder Flußmittelreste, die die Lötfestigkeit negativ beeinflussen, vermieden werden. Schließlich werden durch das Unterdrucklötverfahren bessere und gleichmäßigere Besetzungsverhältnisse erzielt, wodurch die Lötfestigkeit ebenfalls erhöht wird.

Dadurch, daß sich als Folge der höheren Arbeitstemperatur beim Vakuumlötverfahren ein Lot mit höherer Liquidus-Linie verwenden läßt, wird die Festigkeit der Verbindung weiter gesteigert bzw. lassen sich Schneidplättchen mit kleinerer Sitzfläche bei gleichen Zerspanungskräften verwenden. Der Abkühlungsvorgang findet nach dem Verfahren vorzugsweise innerhalb der Vakuumvorrichtung statt und erfolgt kontinuierlich und derart gesteuert, daß Eigenspannungen im Werkzeuggrundkörper vermieden werden. Vorteilhaft wird die Abkühlphase so gesteuert, daß eine gezielte Festigkeit des Grundkörpers erreicht wird.

Wesentlich ist ferner, daß aus der Löthitze gehärtet wird, weil dadurch bei geeigneter Werkstoffauswahl das Werkzeug die erforderliche Festigkeit über den gesamten Querschnitt erhält, so daß metallurgische Kerben wie beim Induktionslöten vermieden werden. Insgesamt gesehen ist der Produktionsvorgang mit dem erfindungsgemäßen Verfahren erheblich vereinfacht, da der gesamte Lötvorgang und dessen Vorbereitung automatisiert werden können. Somit ist eine stets gleiche Lötung für alle an einem Werkzeugkörper anzubringenden Schneidplättchen gewährleistet. Darüberhinaus können mehrere, mit Schneidplättchen bestückte Werkzeugkörper in einem Vakuumlötvorgang, ohne von einer Bedienungsperson hinsichtlich der Qualität der Erzeugnisse abhängig zu sein, hergestellt werden. Die Lötung und Wärmebehandlung des Werkzeuges werden in einem Zyklus, also in einer Wärme, ausgeführt.

Um eine verbesserte Lötwirkung zu erzielen, kann es vorteilhaft sein, wenn vor dem Fixieren der Schneidplättchen der Werkzeugkörper mit einer metallischen Reaktionsschicht, z.B. Nickel, versehen wird. Ebenso wie die elektrische Verschweißung punktförmig erfolgt, kann auch der Auftrag des Lotes mittels Lötpaste punktförmig vorgenommen werden. Ein weiteres wesentliches Merkmal des erfindungsgemäßen Verfahrens liegt darin, daß der Werkzeugkörper mit seinen Sitzflächen für die Schneidplättchen nicht mehr durch spanabhebende Verformung, sondern durch Materialumformung, beispielsweise durch Schmieden, Pressen oder durch Gießen als Gußteil, hergestellt wird. Dadurch ergibt sich ein günstiger, nicht durch Spanabhebung gestörter Faserverlauf des Grundkörpergefüges, da die spanabhebende Bearbeitung auf Einzelstellen des Grundkörpers, beispielsweise auf die Sitzflächen für die Schneidplättchen, beschränkt ist.

Das Verfahren nach der Erfindung kann in weiterer Ausbildung so durchgeführt werden, daß mehrere Werkzeugkörper mit den auf ihnen fixierten Schneidplättchen, gegebenenfalls unter Verwendung von Schutzgas, gleichzeitig und in einem einzigen Arbeitsvorgang im Vakuumlötofen auf gleiche Temperatur erwärmt und bei dieser Temperatur gehalten werden. Auf diese Weise ist eine äußerst rationelle, gleichzeitige Herstellung mehrerer Werkzeuge unter gleichen technischen Bedingungen möglich, wodurch eine Qualitätsnorm für diese Werkzeuge gewährleistet ist.

Das erfindungsgemäße Verfahren ermöglicht es ferner, ein spanabhebendes Werkzeug herzustellen, bei welchem das Schneidplättchen nicht mehr halbkreisförmig, wie beispielsweise in DE-OS 38 15 917 beschrieben, hergestellt sein muß, sondern die Form eines Rhomboids oder die eines Trapezes haben kann, wobei die Sitzflächen am Werkzeugkörper den Konturen eines rhomboid- oder trapezförmig ausgebildeten Schneidplättchens angepaßt sind.

Bei rhomboidförmig ausgebildeten Schneidplättchen ist es vorteilhaft, die schrägen Seiten des Rhomboids mit einem Winkel von etwa 20° bis 30°, vorzugsweise 25°, auszubilden, wobei eine dieser Schrägseiten und die zugehörige Grundseite des Rhomboids die Sitzflächen am Werkzeugkörper bilden. An der zur Lötung vorgesehenen Schrägseite ergibt sich ein Formschluß, der bei Belastung durch die Schnittkräfte, die Schneidplatte mechanisch abstützt. Dadurch wird die Lötfestigkeit zusätzlich an den Schrägen unterstützt.

In der Zeichnung ist ein Ausführungsbeispiel für ein Werkzeug, hergestellt nach dem erfindungsgemäßen Verfahren, schematisch dargestellt.
- Fig. 1: zeigt ein Fräswerkzeug, dessen Werkzeugkörper 1 am Umfang mit Schneidplättchen bestückt ist.
- Fig. 2: zeigt eine Ansicht auf das Fräswerkzeug der Fig. 1 nach Pfeil II.
- Fig. 3: ist ein Teilschnitt durch den Werkzeugkörper 1 mit einem rhomboidförmigen Schneidplättchen 3.

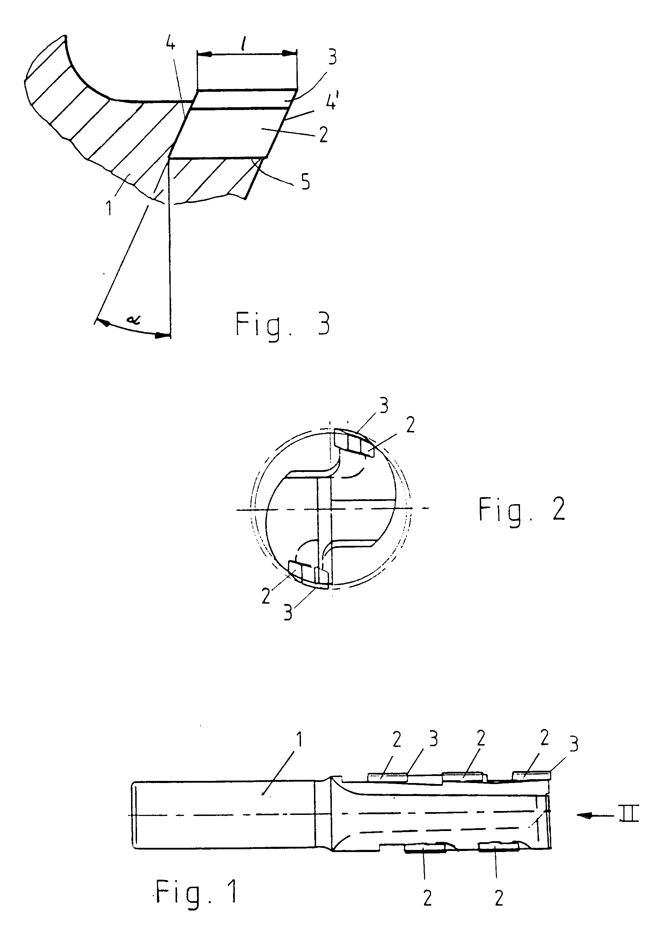

Wie aus Fig. 1 ersichtlich, sind an dem Werkzeugkörper 1 mehrere Schneidplättchen 2 mit Abstand voneinander über den Umfang des Werkzeugkörpers 1 angeordnet. Der Werkzeugkörper 1 ist im Wege der Materialumformung, beispielsweise durch Stauchen oder Pressen, hergestellt; die Schneidplättchen 2 können aus Hartmetall bestehen, die mit einer Schneidschicht 3 aus PKD oder einem Keramikmaterial beschichtet sind. Wie aus Fig. 3 ersichtlich, ist das Schneidplättchen rhomboidförmig ausgebildet, wobei vorzugsweise die beiden Schrägflächen 4, 4' des Rhomboids unter einem Winkel von 25° verlaufen. Demgemäß ist die Sitz- bzw. Anlagefläche der Schrägfläche 4 des Schneidplättchens 2 im Werkzeugkörper unter einem Winkel Alpha von vorzugsweise 25° angelegt. Hierdurch erhält man eine erheblich größere Lötfläche, und zwar auch im Bereich der Grundfläche 5 des Rhomboids im Vergleich zu einem rechteckigen Schneidplättchen. Mit der Vergrößerung der Lötfläche erhält man eine größere Lötfestigkeit bzw. kann man im Bedarfsfall bei etwa gleichen Beanspruchungen des Fräsers die Schneidplättchen entsprechend kleiner ausführen. Aus Fig. 2 ist gleichfalls zu erkennen, daß die Schneidplättchen 2, 2 unter einer Neigung von 25° am Grundkörper 1 des Werkzeuges befestigt sind. Der Werkzeugkörper selbst ist durch Materialumformung, beispielsweise im Spritzgußverfahren, aus Stahl hergestellt und nur geringfügig, insbesondere im Bereich der Sitzflächen für die Schneidplatten, spanabhebend bearbeitet. Dabei ist die Form des Grundkörpers 1 weitgehend der endgültigen Form des Fräswerkzeuges bereits angepaßt und es wird, wie schon erwähnt, nur eine spanabhebende Feinbearbeitung durchgeführt.

Bei der Herstellung nach dem erfindungsgemäßen Verfahren lassen sich die Schneidplättchen 2 auf die zugeordneten Sitzflächen am Grundkörper 1 satt aufsetzen, wobei trotzdem gewährleistet ist, daß ausreichendes Lot im Vakuumofen in den bestehenden Kapillarspalt zwischen Schneidplättchen und Aufsitzfläche im Werkzeugkörper eindringt. Dabei kann die Lotmenge genau dosiert werden, so daß vermieden ist, daß überschüssiges Lot wie bei bekannten Herstellverfahren nach außen dringt und beispielsweise durch Sandstrahlen wieder entfernt werden muß.

## Patentansprüche

1. Verfahren zur Herstellung spanabhebener Werkzeuge wie Fräser, Bohrer usw., die mit Schneidplättchen bestückt sind, deren Schneiden aus einer Beschichtung mit polykristallinem Diamant, Hartmetall, Keramik oder einem ähnlichen Schneidwerkstoff bestehen und die nach ihrer Positionierung auf dem Werkzeugkörper mit diesem durch Löten verbunden werden,
dadurch gekennzeichnet, daß die einzelnen Schneidplättchen durch elektrische Punktschweißung am Werkzeugkörper in ihrer positionierten Lage fixiert werden, danach das für die Lötung erforderliche Lot auf jedes Schneidplättchen aufgetragen wird, worauf der Werkzeugkörper mit den fixierten Schneidplättchen bei einer Temperatur zwischen 720° und 850° C und einem Druck zwischen 10⁻⁴ bis 10⁻⁶ mbar im Vakuum miteinander verlötet werden und daß das Werkzeug anschließend langsam abgekühlt wird.

2. Verfahren nach Anspruch 1,
dadurch gekennzeichnet, daß vor dem Fixieren der Schneidplättchen durch elektrische Punktschweißung der Werkzeugkörper mit einer Reaktionsschicht, beispielsweise aus Nickel, versehen wird.

3. Verfahren nach Anspruch 1 oder 2,
dadurch gekennzeichnet, daß der Auftrag des Lotes mittels Lötpaste punktförmig erfolgt.

4. Verfahren nach einem der Ansprüche 1 bis 3,
dadurch gekennzeichnet, daß die Abkühlphase gesteuert im Vakuumofen vorgenommen wird.

5. Verfahren nach einem der Ansprüche 1 bis 4,
dadurch gekennzeichnet, daß durch Steuerung der Abkühlphase die Festigkeit des Grundkörpers gezielt beeinflußt wird.

6. Verfahren nach einem der Ansprüche 1 bis 5,
dadurch gekennzeichnet, daß der Werkzeugkörper mit den Sitzflächen für die Schneidplättchen durch Materialumformung, beispielsweise durch Schmieden, Pressen, Spritzgießen oder dgl., hergestellt wird.

7. Verfahren nach einem der Ansprüche 1 bis 6,
dadurch gekennzeichnet, daß mehrere Werkzeugkörper mit den fixierten Schneidplättchen gegebenenfalls unter Verwendung von Schutzgas gleichzeitig im Vakuumlötofen auf gleiche Temperatur erwärmt und bei dieser Temperatur gehalten werden.

8. Nach dem Verfahren gemäß einem der Ansprüche 1 bis 7 hergestelltes spanabhebendes Werkzeug, das mit Schneidplättchen bestückt ist, deren Schneiden aus einer Beschichtung mit polykristallinem Diamant, Hartmetall, Keramik oder einem ähnlichen Schneidwerkstoff bestehen, und die nach ihrer Positionierung auf dem Werkzeugkörper mit ihm durch Löten verbunden sind,
dadurch gekennzeichnet, daß die einzelnen Schneidplättchen durch elektrische Punktschweißung am Werkzeugkörper in ihrer positionierten Lage fixiert und mit nach dem Fixieren aufgetragenem Lot versehen sind, und daß die Schneidplättchen rhomboid- oder trapezförmig sind und die Sitzfläche am Werkzeugkörper dieser Form angepaßt ist.

9. Spanabhebendes Werkzeug nach Anspruch 8,
dadurch gekennzeichnet, daß die schrägen Seiten (4, 4') des Rhomboids unter einem Winkel von etwa 20° bis 30°, vorzugsweise 25°, verlaufen, und daß diese Schrägseiten die Anlage- und Lötfläche des Schneidplättchens am Werkzeugkörper (1) bilden.

10. Spanabhebendes Werkzeug nach einem der Ansprüche 8 oder 9,
dadurch gekennzeichnet, daß die Grundfläche (5) des rhomboidförmigen Schneidplättchens (2) die Sitzfläche im Werkzeugkörper bildet.

## Claims

1. Method for manufacturing cutting tools such as milling tools, drills, etc., which are provided with tips, whereof the cutting edges consist of a coating with polycrystalline diamond, hard metal, ceramic material or a similar cutting material and which after their positioning on the tool body, are connected to the latter by soldering, characterized in that the individual tips are fixed in position by electrical spot welding on the tool body, then the solder necessary for the soldering is applied to each tip, whereupon the tool body with the fixed tips are soldered together in a vacuum at a temperature of between 720° and 850°C and a pressure of between 10⁻⁴ to 10⁻⁶ mbars and that the tool is then cooled slowly.

2. Method according to Claim 1, characterized in that before the fixing of the tips by electrical spot welding, the tool body is provided with a reaction layer, for example of nickel.

3. Method according to Claim 1 or 2, characterized in that the solder is applied in spots in the form of solder paste.

4. Method according to one of Claims 1 to 3, characterized in that the cooling phase is undertaken in a controlled manner in a vacuum furnace.

5. Method according to one of Claims 1 to 4, characterized in that by controlling the cooling phase, the strength of the basic member is influenced in a specific manner.

6. Method according to one of Claims 1 to 5, characterized in that the tool body with the seating surfaces for the tips is produced by material deformation, for example by forging, pressing, injection moulding or the like.

7. Method according to one of Claims 1 to 6, characterized in that several tool bodies with the fixed tips are possibly heated to the same temperature using protective gas simultaneously in vacuum soldering furnaces and are kept at this temperature.

8. Cutting tool produced according to the method in accordance with one of Claims 1 to 7, which is provided with tips, whereof the cutting edges consist of a coating with polycrystalline diamond, hard metal, ceramic material or a similar cutting material, and which after their positioning on the tool body are connected thereto by soldering, characterized in that the individual tips are fixed in their position on the tool body by electrical spot welding and are provided with solder applied after fixing, and that the tips are rhomboid-shaped or trapezoidal and the seating surface on the tool body is adapted to this shape.

9. Cutting tool according to Claim 8, characterized in that the inclined sides (4, 4') of the rhomboid extend at an angle of approximately 20° to 30°, preferably 25°, and that these inclined sides form the abutment and soldering surface of the tip on the tool body (1).

10. Cutting tool according to one of Claims 8 or 9, characterized in that the bottom surface (5) of the rhomboid-shaped tip (2) forms the seating surface in the tool body.

## Revendications

1. Procédé pour fabriquer des outils de coupe, tels que fraiseuses, forets, etc..., qui sont recouverts de plaquettes dont les tranchants se composent d'un revêtement de diamant polycristallin, carbure, céramique, ou autre matériau de coupe analogue, et qui sont assemblées par brasage avec le corps d'outil, après leur positionnement sur ce dernier, caractérisé en ce que les différentes plaquettes de coupe sont fixées sur le corps d'outil, dans leur position de positionnement, par soudage par points électrique, la brasure requise pour le soudage est ensuite appliquée sur chaque plaquette, puis le corps d'outil est soudé sous vide avec les plaquettes fixées, à une température de 720 à 850°C et sous une pression comprise entre 10⁻⁴ et 10⁻⁶ mbar, et en ce que l'outil est ensuite lentement refroidi.

2. Procédé suivant la revendication 1, caractérisé en ce que le corps d'outil est muni d'une couche réactive, de nickel par exemple, avant la fixation des plaquettes de coupe par soudage par points électrique.

3. Procédé suivant l'une des revendications 1 ou 2, caractérisé en ce que l'application de la brasure est assurée par points, au moyen d'une pâte à souder.

4. Procédé suivant l'une quelconque des revendications 1 à 3, caractérisé en ce que la phase de refroidissement est assurée et contrôlée dans un four à vide.

5. Procédé suivant l'une quelconque des revendications 1 à 4, caractérisé en ce que la résistance du corps de base est influencée d'une manière rationnelle par le contrôle de la phase de refroidissement.

6. Procédé suivant l'une quelconque des revendications 1 à 5, caractérisé en ce que le corps d'outil, avec les surfaces de contact pour les plaquettes de coupe, est fabriqué par formage de matériau, par forgeage, compression, moulage par injection, ou autres, par exemple.

7. Procédé suivant l'une quelconque des revendications 1 à 6, caractérisé en ce que plusieurs corps d'outil, avec les plaquettes de coupe fixées, sont simultanément portés à la même température dans un four de brasage à vide, en utilisant un gaz de protection le cas échéant, et sont maintenus à cette température.

8. Outil de coupe fabriqué d'après le procédé conforme à l'une quelconque des revendications 1 à 7, recouvert de plaquettes de coupe, dont les tranchants se composent d'un revêtement de diamant polycristallin, de carbure, de céramique, ou d'un autre matériau de coupe analogue, et qui sont assemblé es par brasage avec le corps d'outil, après leur positionnement sur ce dernier, caractérisé en ce que les différentes plaquettes de coupe sont fixées sur le corps d'outil, dans leur position de positionnement, par soudage par points électrique, et sont munies de la brasure appliquée après la fixation, et en ce que les plaquettes de coupe ont une forme rhomboïdale ou trapézoïdale, forme à laquelle est adaptée la surface de contact sur le corps d'outil.

9. Outil de coupe suivant la revendication 8, caractérisé en ce que les côtés obliques (4, 4') du rhomboïde se situent sous un angle de l'ordre de 20 à 30°, de 25° de préférence, et en ce que ces côtés obliques forment la surface d'appui et de soudage de la plaquette de coupe sur le corps d'outil (1).

10. Outil de coupe suivant l'une quelconque des revendications 8 ou 9, caractérisé en ce que la surface de base (5) de la plaquette de coupe rhomboïdale (2) forme la surface de contact dans le corps d'outil.
